# EUROPÄISCHE PATENTSCHRIFT

(11) **EP 2 498 595 B1**
(45) Veröffentlichungstag und Bekanntmachung des Hinweises auf die Patenterteilung: **14.08.2013**
(21) Anmeldenummer: 10801374.9
(22) Anmeldetag: 12.11.2010
(51) Int. Cl.: A01K 1/015

(54) **VERFAHREN ZUR HERSTELLUNG EINER TIERSTREU**
METHOD FOR PRODUCING ANIMAL LITTER
PROCÉDÉ DE FABRICATION D'UNE LITIÈRE

(30) Priorität: 13.11.2009 DE 102009044521
(43) Veröffentlichungstag der Anmeldung: 19.09.2012
(73) Patentinhaber: Cirkel GmbH & Co. KG, 45721 Haltern am See (DE)
(72) Erfinder: DAL, Attila, 48429 Rheine (DE)
(74) Vertreter: Habbel, Ludwig
(86) Internationale Anmeldenummer: PCT/DE2010/075131
(87) Internationale Veröffentlichungsnummer: WO 2011/057630

(56) Entgegenhaltungen:
- DE-A1- 2 028 227
- DE-A1- 2 402 670
- US-A1- 2004 151 650

## Beschreibung

Aus der DE 101 21 098 A1 oder der US 2004/0151650 A1 ist es bekannt, zur Herstellung eines Calciumsilikathydratgranulats Calciumoxid (CaO), häufig auch als gebrannter Kalk oder ungelöschter Kalk bezeichnet, und Siliziumdioxid (SiO₂), häufig auch als Kieselsäure oder Quarz bezeichnet, in eine ausreichende Menge Wasser (H₂O) einzumischen. Diese Zuschlagstoffe werden mit einer bestimmten Füllhöhe in eine Gießform von üblicherweise mehreren m² Grundfläche gegeben. Sie reagieren unter Volumenzunahme exotherm und ergeben einen halbfesten Formkörper. Die Abmessungen des Formkörpers entsprechen der Gießform, jedoch aufgrund der Volumenzunahme mit einer Höhe, die über der ursprünglichen Füllhöhe liegt. Da der Formkörper noch nicht das endgültige Produkt darstellt, sondern weiter verarbeitet wird, wird er im Rahmen des vorliegenden Vorschlags als Rohprodukt bezeichnet.

Das Rohprodukt wird im Autoklaven hydrothermal zu einem als CSH bezeichnetem Calcium-Silikat-Hydrat umgesetzt, und zwar zugunsten einer einfachen Handhabung bevorzugt in unzerkleinerter Form als Formkörper. Auch das resultierende CSH stellt noch nicht das endgültige Produkt dar, sondern wird weiter verarbeitet, so dass es als Zwischenprodukt bezeichnet wird. Es weist nach dem Autoklavieren eine sogenannte Zwischenfeuchte von 20% bis 40% auf, typischerweise im Bereich um 30 %, sowie noch im wesentlichen dieselben Abmessungen wie der Formkörper vor dem Autoklavieren.

Bei dem bekannten Verfahren wird eine Stückigkeit des Zwischenproduktes, ausgehend von etwa denselben Abmessungen wie der Formkörper, durch verschiedene Aufbereitungsschritte erreicht, bei der ein Granulat mit einer gleichmäßigen Korngröße im Bereich von 1 bis 5 mm erhalten wird. Da dieses Granulat noch nicht das endgültige Produkt darstellt, sondern weiter verarbeitet wird, wird es im Rahmen des vorliegenden Vorschlags als Rohgranulat bezeichnet.

Das Rohgranulat wird von der Zwischenfeuchte des Zwischenprodukts, also von ca. 30%, auf einen Feuchtegrad von ca. 3% getrocknet. Zur Unterscheidung von der Zwischenfeuchte wird dieser sehr niedrige Feuchtewert im Rahmen des vorliegenden Vorschlags als Trockenfeuchte bezeichnet. Der zunächst in sich widersprüchlich erscheinende Begriff der Trockenfeuchte ist bewusst gewählt und soll verdeutlichen, dass das Produkt einen besonders geringen Feuchtegehalt aufweist.

Somit wird nach dem bekannten Verfahren ein CSH als Rohgranulat mit 3 % Trockenfeuchte und einer Korngröße von 1 bis 5 mm erhalten.

Anschließend wird bei dem bekannten Verfahren diesem Rohgranulat eine Magnesiumverbindung in Form einer wässrigen Lösung von Magnesiumchlorid zugegeben, beispielsweise durch Besprühung des Rohgranulats. Das derart behandelte Rohgranulat wird nun, nach Zugabe der Magnesiumverbindung, im Rahmen des vorliegenden Vorschlags als Granulat bezeichnet. Das so erhaltene Granulat stellt das verkaufsfertige Produkt dar, nämlich einen Zusatz zu einer Tierstreu oder eine komplette Tierstreu, so dass es im Rahmen des vorliegenden Vorschlags als Endprodukt bezeichnet wird.

Das bekannte Verfahren wird in der Praxis angewendet, wobei das Rohgranulat und das endgültige Granulat in der Praxis auch Korngrößen über 5 mm aufweisen können, beispielsweise bis zu 10 mm. Wie aus der Praxis bekannt ist, steigt durch die Zugabe der wässrigen Lösung die Feuchte des Materials von dem Wert der Trockenfeuchte, also 3% beim Rohgranulat, auf einen Wert von 10% bis 15% beim Endprodukt an, beispielsweise auf ca. 12%.

Aus dem vorgenannten Stand der Technik ist es ebenso wie aus der DE 41 08 590 C2 bekannt, als Magnesiumträger Magnesiumchlorid (MgCl₂) zu verwenden. Neben anderen Eigenschaften erhält das Rohgranulat dadurch geruchsbindende Eigenschaften, so dass das fertige Granulat beispielsweise als Beimischung zu einer Tierstreu oder selbst als Tierstreu dienen kann, wobei insbesondere die Verwendung als Katzenstreu üblich ist.

Da die Zugabe als wässrige Lösung in Form von Magnesiumchlorid erfolgt, steigt die Feuchte des Rohgranulats von dem niedrigen Wert der Trockenfeuchte wieder auf einen höheren Wert an. Dieser liegt zwischen der Trockenfeuchte und der ursprünglichen Zwischenfeuchte und beträgt beispielsweise etwa 12 %. Diese Feuchte wird im Rahmen des vorliegenden Vorschlags als so genannte Endfeuchte bezeichnet, denn nach der Zugabe des Magnesiumchlorid liegt nun ein Granulat vor, welches ohne weitere Behandlung einsetzbar und verkaufsfähig ist, und das beispielsweise als Tierstreu verwendbar ist.

Zusammenfassend kann das bekannte Verfahren wie folgt beschrieben werden: nachdem hydrothermal ein CSH gebildet worden ist, also unter bestimmten erhöhten Temperatur- und Druckverhältnissen im Autoklaven, wird dieses CSH zu einer Tierstreu weiterverarbeitet und im Rahmen dieser Weiterverarbeitung wird die geruchsbindende Komponente in Form von in Wasser gelöstem Magnesiumchlorid zugegeben. Das Endprodukt weist die Endfeuchte mit einem Wert von etwa 12 % auf, hat geruchsbindende Eigenschaften sowie eine reinweiße Farbe, ist zudem staubfrei und kann aufgrund seines spezifischen Gewichts von etwa 0,5 g/cm³ als ein leichtes Material bezeichnet werden.

Aus der DE 10 2006 041 553 A1 ist ein Verfahren zur Herstellung eines mineralischen Granulats bekannt, welches sich von vorbeschriebenen Verfahren grundsätzlich unterscheidet, indem nicht CSH aus Rohstoffen erzeugt wird, sondern als Ausgangsmaterial bereits zuvor hergestelltes CSH verwendet wird. Das bereits vorhandene CSH liegt als Mehl oder in körniger Form vor, beispielsweise als Abfallstoffe aus der Produktion von Poren- oder Schaumbeton.

Aus der DE 24 02 670 C3 ist ein Verfahren zur Herstellung von hydratisierten Calciumsilikaten bekannt, wobei beispielhaft Xonotlit und Tobermorit genannt sind. Xonotlit beispielsweise wird zur Herstellung feuerhemmender Bauelemente verwendet, wie z. B. in Türen oder Trockenbau-Wandelementen. Dabei sind möglichst homogene Produkteigenschaften über die gesamte Fläche beispielsweise einer Tür oder eines Wandelements sicherzustellen, z. B. hinsichtlich der mechanischen oder auch thermischen Belastbarkeit dieser Elemente. Zudem sind an die mechanische oder auch thermische Belastbarkeit dieser Elemente hohe Anforderungen zu stellen.

Folglich ist gemäß der DE 24 02 670 C3 auch ausdrücklich vorgesehen, dass das dort beschriebene Herstellungsverfahren die Erzeugung von sogenannten Grünkörpern ermöglicht, die im Gemisch mit Fasern verformt werden können und dann eine höhere Festigkeit und eine geringere Trocknungsschrumpfung haben. Bei diesem Stand der Technik steht daher die Herstellung von Kristallstrukturen und die Form der Primärkristalle im Vordergrund.

Des Weiteren erfolgt die Herstellung des Produkts in Aufschlämmungen, im Unterschied zu der eingangs beschriebenen Herstellungsweise, bei der das standfeste, halbfeste Rohprodukt erzeugt und dann autoklaviert und zerkleinert wird. Die bei der eingangs beschriebenen Herstellungsweise gegebene Standfestigkeit des Rohprodukts ist bei dem Herstellungsverfahren nach der DE 24 02 670 C3 nicht gegeben: das dort vorgesehene Material würde wegfließen.

Zudem werden bei der aus der DE 24 02 670 C3 bekannten Verfahrensweise die Feststoffe in folgendem Mol-Verhältnis zugegeben: ausgehend von 1000 Teilen SiO₂ als Bezugsgröße werden 600 bis 1350 Teile CaO und 20 bis 70 Teile MgO verwendet, und auf 1 Teil dieser Feststoff-Mischung als Bezugsgröße werden 2,5 bis 20 Teile H₂O verwendet.

Und schließlich betrifft die in der DE 24 02 670 C3 beschriebene Herstellungsweise ein kontinuierliches Verfahren, während das eingangs beschriebene Verfahren diskontinuierlich in Batches durchgeführt wird, nämlich mit der Herstellung und hydrothermischen Behandlung der einzelnen Formkörper.

Aus der im Jahre 1902 veröffentlichten US 697 319 A ist ein Verfahren zur Herstellung von Dolomit-Sandstein bekannt, wobei das Reaktionsprodukt aus dem Löschen von gebranntem Dolomit, welches als Magnesiumkomponente Mg(OH)₂ enthält, mit Siliziumdioxid thermal umgesetzt wird. Dabei wird stets mehr SiO₂ als CaO verwendet, und die hergestellten künstlichen Sandsteine sollen eine Witterungsbeständigkeit und Festigkeit aufweisen, die sie für die Anwendung im Bauwesen eignet. Zunächst hergestellte Formstücke werden im Dampf unter Druck hydrothermal gehärtet und stellen dann das fertige Endprodukt dar. Es gibt weder einen Hinweis darauf, dass die gehärteten Formstücke ein Zwischenprodukt seien, die noch weiter zu einem Endprodukt verarbeitet werden sollen, noch darauf, dass das hergestellte Produkt als Tierstreu geeignet sei.

Aus der DE 2 028 227 A ist ein Verfahren zur Herstellung von Calciummagnesiumsilikathydraten bekannt, wobei ein als sehr feinteilig oder auch als feinteiliges Pulver bezeichnetes Produkt erhalten wird, welches sich insbesondere als Füllstoff für viele Anwendungsgebiete eignet, bei denen eine basische Aktivität vorteilhaft ist. Diese Druckschrift schlägt die Verwendung von deutlich mehr CaO als SiO₂ vor. Die vorgesehen hydrothermale Umsetzung kann zwar in Einrichtungen durchgeführt werden, wie sie für die Härtung von Kalksandsteinen oder Gasbeton üblich sind, die Druckschrift gibt jedoch keinen Hinweis darauf, dass die von ihr vorgesehene hydrothermale Umsetzung dem resultierenden Material eine bestimmte Härte verleiht, die beispielsweise eine Formbeständigkeit von Granulat ermöglichen würde. Auch gibt diese Druckschrift keinen Hinweis darauf, dass das mit dem dort vorgeschlagenen Verfahren erzeugte Material als Tierstreu geeignet sei.

### Aufgabe:

Der Erfindung liegt die Aufgabe zu Grunde, ein Herstellungsverfahren anzugeben, das unter Beibehaltung der hohen Produktqualität eine wirtschaftlichere Herstellung von Tierstreu ermöglicht.

Diese Aufgabe wird durch ein Verfahren mit den Verfahrensschritten nach Anspruch 1 gelöst.

Die Erfindung schlägt mit anderen Worten vor, an Stelle von Magnesiumchlorid einen chloridfreien Magnesium-Träger zu verwenden. Dabei werden vorschlagsgemäß vier separate Zuschlagstoffe verwendet, um die vier Stoffe CaO, SiO₂, H₂O und die Magnesiumverbindung zu liefern, die als MgX bezeichnet werden kann. Als Zuschlagstoffe werden also die Materialien bezeichnet, die für das Verfahren verwendet und beispielsweise in einen Reaktionsbehälter gegeben werden.

Die Zuschlagstoffe können rein sein, indem sie ausschließlich den Stoff enthalten, als dessen Lieferant sie eingesetzt werden, beispielsweise Wasser als H₂O-Lieferant, Quarz als SiO₂-Lieferant oder Branntkalk als CaO-Lieferant.

Es kann jedoch auch vorkommen, dass ein erster Zuschlagstoff nicht nur einen einzigen der für das Verfahren gewünschten Stoffe enthält, sondern auch einen zweiten dieser Stoffe. Der erste Zuschlagstoff wird also vordringlich als Lieferant eines ersten Stoffes verwendet. "Vordringlich" heißt in diesem Zusammenhang, dass dieser erste Stoff beispielsweise in keinem anderen Zuschlagstoff enthalten ist, oder dass er in dem ersten Zuschlagstoff zu einem besonders hohen Anteil vorkommt. Wenn ein erster Zuschlagstoff nicht nur einen einzigen der für das Verfahren gewünschten Stoffe enthält, sondern auch einen zweiten dieser Stoffe, ist dies grundsätzlich unschädlich und kann sogar wirtschaftlich vorteilhaft sein. In diesen Fällen müssen lediglich die Mengen der jeweils eigens zugeführten "zweiten" Zuschlagstoffe, die den zweiten Stoff enthalten, entsprechend reduziert werden, um die vorschlagsgemäßen Mengenverhältnisse einzuhalten, wie an dem folgenden Beispiel erläutert wird:
Beispielsweise enthält Dolomit Magensium- und KalziumVerbindungen in Form von MgCO₃ und CaCO₃. Wenn der Dolomit als gebrannter Dolomit vorliegt und dementsprechend MgO enthält, kann er im Rahmen des vorschlagsgemäßen Verfahrens vordringlich als Magnesiumlieferant vorgesehen sein. Je nach der Verfahrensführung beim Brennen des Dolomits können die Kalzium-Anteile unverändert in Form von CaCO₃ oder aber in Form von CaO vorliegen. In dem erstgenannten Fall würde das CaCO₃ lediglich einen Füllstoff darstellen, der für das vorschlagsgemäße Verfahren nicht relevant ist. In dem zweiten Fall muss die Menge des eigens als CaO-Lieferant vorgesehenen Zuschlagstoffes, beispielsweise Branntkalk, um den Anteil reduziert werden, zu welchem durch die Zugabe von Dolomit bereits CaO in das Verfahren eingebracht wird, wenn nämlich bereits der gebrannte Dolomit einen Branntkalk-Anteil aufweist.

Rein beispielhaft und durch praktische Versuche belegt kann die Zugabe der Magnesiumverbindung in Form von vollständig gebranntem Dolomit-Kalk (MgO·CaO) erfolgen, der erheblich preisgünstiger ist als Magnesiumchlorid, jedoch sind voraussichtlich auch andere Magnesiumsalze geeignet, um als Magnesium-Träger zu dienen. Und auch halbgebrannter Dolomit-Kalk (CaCO₃·MgO) scheint für das vorgeschlagene Verfahren geeignet. Setzt man dem gebrannten Dolomit-Kalk als erstem Zuschlagstoff, der den Stoff "Magnesiumverbindung" liefert, als weitere Stoffe gebrannten Kalk zu (in einer Menge, die einen eventuell vorhandenen Anteil an gebranntem Kalk im Dolomit-kalk berücksichtigt), sowie Quarz und Wasser, so erhält man das gewünschte Calciumsilikathydrat CSH von vornherein mit einer geruchsbindenden Komponente. Das Magnesium kann z. B. als Magnesiumhydroxid vorliegen:

MgO·CaO + CaO + SiO₂ + H₂O → CSH + MgX₂,

also beispielsweise

MgO·CaO + CaO + SiO₂ + H₂O → CSH + Mg(OH)₂,

wobei das Magnesium gegebenenfalls aber auch in die Kristallstruktur des CSH mit eingebunden sein kann.

Dabei ist zu beachten:
■ Die beiden vorstehenden Formeln stellen keine Formeln im Sinne stöchiometrisch korrekter chemischer Reaktionsgleichungen dar. Vielmehr sind lediglich Reaktionspartner und Reaktionsprodukte aufgeführt, die im Rahmen des vorliegenden Vorschlags interessieren.
■ Mit CSH sind nicht Kohlenstoff, Schwefel und Wasserstoff bezeichnet, sondern das bereits erwähnte Calciumsilikathydrat.
■ In der ersten Formel steht die Komponente X allgemein für ein Anion, in Form beispielsweise eines Silikats oder Hydroxids.
■ Als Naturprodukt liegt Dolomit-Kalk abhängig vom Vorkommen, also von seiner geologischen Herkunft, in unterschiedlichen Zusammensetzungen vor. Die im Rahmen des vorliegenden Vorschlags interessierenden Bestandteile sind mit MgO-CaO angegeben und nur diese Bestandteile sind in beiden vorstehenden Formeln wiedergegeben, um den Einsatz des Dolomit-Kalks anzuzeigen.

Die Feststoffe werden vorschlagsgemäß in folgendem Verhältnis zugegeben, wobei als Bezugsgröße die Menge an SiO₂ als 1000 Gewichtsanteile gesetzt wird: ausgehend von diesen 1000 Gewichtsanteilen SiO₂ werden 300 bis 550 Gewichtsanteile CaO und - als Magnesiumträger - 70 bis 400 MgO verwendet.

Im Verhältnis zu dieser gesamte Feststoffmenge, die, um wiederum eine Bezugsgröße zu schaffen, als 1 Gewichtsanteil Feststoffe angesehen wird, werden 0,5 bis 2 Gewichtsanteile H₂O verwendet.

Daraus entsteht eine fließfähige breiige Masse, die exotherm reagiert und eine zunächst pastöse und dann halbharte Konsistenz als Rohprodukt einnimmt, und die dann hydrothermisch im Autoklaven zum Zwischenprodukt gehärtet wird. Dazu kann das Material in der Gießform verbleiben, wobei im Sinne einer möglichst wirtschaftlichen Verfahrensführung und zur Erzielung möglichst kurzer hydrothermaler Behandlungszeiten vorgesehen sein kann, dass das Zwischenprodukt aus der Gießform entnommen wird, um den Platz im Autoklaven besser zu nutzen und eine möglichst effiziente hydrothermale Umsetzung zu ermöglichen.

Die Erfindung schlägt also vor, die geruchsbindend wirksame Komponente Mg- entgegen der bekannten Praxis nicht zu Ende des Verfahrens, sondern bereits zu Anfang des Prozesses, bei der Herstellung des Rohproduktes und noch vor dessen hydrothermischen Härtung zum Zwischenprodukt, also der Bildung des gewünschten CSH beizugeben. Die Erfindung geht dabei davon aus, dass es die vorteilhaften Eigenschaften des Granulats - insbesondere angesichts seiner Verwendung als Tierstreu - nicht nachteilig beeinflusst, wenn das Magnesium in Form von Magnesiumhydroxid Mg(OH)₂ an Stelle von Magnesiumchlorid (MgCl₂) zugegeben wird.

Besonders vorteilhaft und wirtschaftlich im Sinne einer möglichst vollständigen Umsetzung der beteiligten Reaktionspartner werden diese in den folgenden Mengenverhältnissen verwendet:
0,75 Gewichtsanteile bis 4 Gewichtsanteile (MgO·CaO) + 3 Gewichtsanteile bis 5,5 Gewichtsanteile (CaO) + 10 Gewichtsanteile SiO₂ + n Gewichtsanteile H₂O

Dabei ist mit 0,75 bis 4 und mit 3 bis 5,5 jeweils bezeichnet, dass die beteiligten Reaktionspartner in dem Bereich von 0,75 bis 4 Gewichtsanteilen bzw. von 3 bis 5,5 Gewichtsanteilen verwendet werden, jeweils bezogen auf die Bezugsgröße von 10 Gewichtsanteilen SiO₂. In praktischen Versuchen z. B. wurden 3 Gewichtsanteile (MgO·CaO) und 5 Gewichtsanteile (CaO) verwendet. Die geeignete Wassermenge kann in an sich bekannter Weise empirisch ermittelt werden und ist daher mit n angegeben, sie liegt bei 0,5 bis 1,5 Gewichtsanteilen, bezogen auf 1 Gewichtsanteil Feststoff..

Das vorgeschlagene Verfahren zeichnet sich dadurch aus, dass die Mg-Verbindung bereits vor der Autoklavierung zugegeben wird, wobei die Mg-Verbindung überraschend die hydrothermale Bildung des Zwischenprodukts aus den Ausgangsstoffen nicht wesentlich beeinträchtigt. Das hergestellte Endprodukt weist eine Geruchsbindung auf, wie sie bisher nur bei einer nachträglichen Behandlung mit einer Magnesiumverbindung wie z. B. MgCl₂ bekannt war, so dass das Endprodukt für die Verwendung als Tierstreu geeignet ist.

Die vorgeschlagene Verfahrensweise stellt daher eine Art "Eintopfreaktion" dar, bei der in nur einem Schritt, nämlich durch das Autoklavieren der zuvor zusammengemischten Bestandteile, bereits in chemischer Hinsicht das endgültige Produkt erhalten wird, das keiner weiteren chemischen Reaktion oder der Hinzufügung zusätzlicher Stoffe bedarf. Verfahrenstechnisch stellt es jedoch ein Zwischenprodukt dar, , da es noch zwei einfache physikalische Verfahrensschritte durchlaufen wird: erstens weist das Zwischenprodukt noch nicht die Korngröße des verkaufsfertigen Endproduktes auf, beispielsweise die bei Tierstreu übliche Korngröße bis 10 mm, so dass es noch zerkleinert werden muss. Zudem wird es von seiner sogenannten Zwischenfeuchte von etwa 30 % noch auf eine niedrigere, endgülte so genannte Endfeuchte getrocknet.

Durch Wasser oder anhaftende Flüssigkeit werden Partikel an das Granulat gebunden, so dass es weniger staubig erscheint. Die Fähigkeit des Granulats, Staub zu binden, hängt also mit der Feuchtigkeit des Granulats zusammen. Es kann daher vorgesehen sein, das Granulat mit einer höheren Feuchte als der erwähnten Endfeuchte von 12 % zu verkaufen. So kann beispielsweise vorgesehen sein, das Material nicht von der Zwischenfeuchte von etwa 30 % auf die Endfeuchte von etwa 12 % zu trocknen, sondern es weniger stark zu trocknen. Oder es kann vorgesehen sein, das an sich fertige, eine gewisse Feuchte aufweisende Granulat mit Wasser zu besprühen, um es auf eine demgegenüber höhere Endfeuchte zu bringen und die Staubbindefähigkeit des Granulats zu erhöhen.

Die vorgeschlagene Verfahrensweise unterscheidet sich daher beispielsweise von der Verwendung eines zunächst technisch aufwendig hergestellten Zwischenproduktes wie es gemäß der DE 10 2006 041 553 A1 in Form des CSH vorgesehen ist, welches zunächst hergestellt werden muss und dann als Ausgangsstoff für die Herstellung eines mineralischen Granulats dient.

Das vorschlagsgemäß hergestellte Zwischenprodukt muss lediglich auf die gewünschte Feuchte getrocknet und auf die gewünschte Korngröße gebracht werden. Ein eingangs erwähnter zusätzlicher Trocknungsschritt, bei welchem ein erstes Zwischenprodukt von seiner Zwischenfeuchte auf eine sehr geringe Trockenfeuchte herabgetrocknet wird, bevor dann wieder die Feuchte auf eine Endfeuchte angehoben wird, ist nicht zwingend erforderlich und kann mit erheblichen wirtschaftlichen Vorteilen entfallen.

Wie bei der herkömmlichen Verfahrensweise kann eine Endfeuchte von etwa 12 % vorgesehen sein, wenn das Granulat beispielsweise als Tierstreu mit den gleichen Eigenschaften wie die handelsübliche Tierstreu verwenden werden soll. Es muss also nur ein einziger Trocknungsschritt von der Zwischenfeuchte, also beispielsweise 30 %, direkt auf die Endfeuchte, also beispielsweise 12 % erfolgen, so dass eine erhebliche Zeit- und Energieeinsparung im Vergleich zu der eingangs erwähnten, herkömmlichen Herstellung des Granulats erzielt wird, bei welcher zunächst in einem Zwischenschritt die so genannte Trockenfeuchte von beispielsweise 3 % erreicht wird.

Die vorgeschlagene Verfahrensweise weist folglich deutliche wirtschaftliche Vorteile gegenüber dem bekannten und eingangs beschriebenen Verfahren zur Herstellung des Granulats auf:
Erstens ist wirtschaftlich vorteilhaft, dass zur Trocknung deutlich weniger Energie aufgewandt werden muss als bei dem herkömmlichen Herstellungsverfahren, denn das Zwischenprodukt muss vorschlagsgemäß von seiner Zwischenfeuchte nur direkt bis zur Endfeuchte von 12 % getrocknet werden und nicht zunächst bis zu einer Trockenfeuchte von 3 %, wie dies beim bekannten Herstellungsverfahren erforderlich ist.

Dieser vorschlagsgemäß geringere Energiebedarf ist zudem nicht nur ökonomisch vorteilhaft, sondern auch ökologisch, weil z. B. geringere Mengen eines Energieträgers verbrannt werden müssen, insbesondere wenn es sich bei dem Energieträger um einen endlichen Rohstoff handelt.

Zweitens ist wirtschaftlich vorteilhaft, dass mit dem chloridfreien Magnesiumsalz wie z. B. dem gebrannten Dolomit-Kalk ein sehr viel preisgünstiger Magnesiumsträger verwendet wird als das Magnesiumchlorid, welches beim herkömmlichen Herstellungsverfahren verwendet wird.

Drittens ist verfahrenstechnisch und auch wirtschaftlich vorteilhaft, dass ein Verfahrensschritt entfallen kann, nämlich das nachträgliche Hinzufügen einer Komponente wie dem im erläuterten Beispiel verwendeten MgCl₂, so dass die für diesen Verfahrensschritt erforderliche Zeit ebenso eingespart werden kann wie der dafür erforderliche apparative Aufwand, wobei zudem die Reduzierung der Verfahrensschritte automatisch auch eine Reduzierung möglicher Störungen bedeutet, so dass das vorgeschlagene Verfahren eine höhere Prozesssicherheit bietet.

## Patentansprüche

1. Verfahren zur Herstellung einer granulatförmigen Tierstreu, mit folgenden Verfahrensschritten:
• zunächst wird unter Verwendung von CaO, SiO₂, H₂O und einer Magnesiumverbindung ein magnesiumdotiertes, als Rohprodukt bezeichnetes Material erzeugt, wobei als Magnesiumverbindung eine chloridfreie Magnesiumverbindung verwendet wird,
und die Feststoffe in folgendem Verhältnis zugegeben werden:
ausgehend von 1000 Gewichtsanteilen SiO₂ werden 300 bis 550 Gewichtsanteile CaO und 70 bis 400 Gewichtsanteile MgO verwendet,
und auf 1 Gewichtsanteil Feststoffe werden 0,5 bis 1,5 Gewichtsanteile H₂O verwendet,
• das zunächst erzeugte Rohprodukt wird hydrothermisch zu einem so genannten Zwischenprodukt gehärtet, wobei das Zwischenprodukt ein als CSH bezeichnetes Calcium-Silikat-Hydrat aufweist sowie eine bestimmte, so genannte Zwischenfeuchte,
• das Zwischenprodukt wird durch zwei Maßnahmen zu dem gewünschten Endprodukt verarbeitet,
indem erstens das Zwischenprodukt von der Zwischenfeuchte durch Trocknung auf eine Endfeuchte gebracht wird, die geringer ist als die Zwischenfeuchte,
wobei die Trocknung unter Vermeidung eines Trocknungs-Zwischenschrittes erfolgt, bei welchem ein Feuchtegrad unterhalb der gewünschten Endfeuchte erreicht wird,
• und indem zweitens das Zwischenprodukt auf die gewünschte, für die Verwendung als Katzenstreu geeignete Korngröße zerkleinert wird.

2. Verfahren nach Anspruch 1,
**dadurch gekennzeichnet,**
**dass** zur Herstellung des Zwischenprodukts gebrannter Dolomit-Kalk als Träger der chloridfreien Magnesiumverbindung zugegeben wird.

3. Verfahren nach Anspruch 1,
**dadurch gekennzeichnet,**
**dass** zur Herstellung des Zwischenprodukts ein Magnesiumsalz als chloridfreie Magnesiumverbindung zugegeben wird.

4. Verfahren nach einem der vorhergehenden Ansprüche,
**dadurch gekennzeichnet,**
**dass** das Zwischenprodukt eine Zwischenfeuchte von 20% bis 40 % aufweist.

5. Verfahren nach einem der vorhergehenden Ansprüche,
**dadurch gekennzeichnet,**
**dass** das Zwischenprodukt von der Zwischenfeuchte auf eine Endfeuchte von 10% bis 15 % gebracht wird.

6. Verfahren nach einem der vorhergehenden Ansprüche,
**dadurch gekennzeichnet,**
**dass** vier separate Zuschlagstoffe verwendet werden, um die vier Stoffe CaO, SiO₂, H₂O und die als MgX bezeichnete Magnesiumverbindung zu liefern.

7. Verfahren nach Anspruch 6,
**dadurch gekennzeichnet,**
**dass** ein erster Zuschlagstoff, welcher einen der vier genannten Stoffe liefert, verwendet wird,
wobei dieser erste Zuschlagstoff auch einen zweiten der vier genannten Stoffe liefert,
und **dass** dieser zweite Stoff auch in einem zweiten Zuschlagstoff enthalten ist, der als vordringlicher Lieferant dieses zweiten Stoffes vorgesehen ist,
wobei die Menge des zweiten Zuschlagstoffes an die Zugabe des ersten Zuschlagstoffes angepasst und derart bemessen wird, dass die gewünschten Mengenverhältnisse der vier Stoffe eingehalten werden.

8. Verfahren nach Anspruch 7,
**dadurch gekennzeichnet,**
**dass** gebrannter Dolomit als Magnesiumlieferant verwendet wird,
wobei der gebrannte Dolomit MgO und CaO enthält, und dass ein zweiter Zuschlagstoff verwendet wird, der als vordringlicher Lieferant von CaO vorgesehen ist.

## Claims

1. Process for manufacturing animal litter in granular form consisting of the following manufacturing steps:
• first a magnesium-enriched material, referred to as the raw product, is prepared using CaO, SiO₂, H₂O and a magnesium compound, where the magnesium compound is a chloride-free magnesium compound and the solid materials are added in the following proportions:
on the basis of 1000 parts by weight of SiO₂, between 300 and 550 parts of CaO and between 70 and 400 parts of MgO are used, and for one part by weight of solid material, between 0.5 and 1.5 parts by weight of H₂O are used,
• the raw product thus prepared is hardened hydrothermically to produce a so-called intermediate product, where the intermediate product contains a calcium-silicate-hydrate, referred to as CSH, and a certain so-called intermediate dampness,
• the intermediate product is processed to the desired end product by two operations where, firstly, the intermediate product is dried from its intermediate dampness to a final dampness which is less than the intermediate dampness, where the process of drying avoids an intermediate drying step, where a degree of dampness is achieved which is below the desired final dampness,
• and where, secondly the intermediate product is reduced to the desired grain size suitable for use as cat litter.

2. Process in accordance with claim 1,
**characterised in that,** to manufacture the intermediate product, burnt dolomite lime is added as carrier of the chloride-free magnesium compound.

3. Process in accordance with claim 1,
**characterised in that,** to manufacture the intermediate product, a magnesium salt is added as the chloride-free magnesium compound.

4. Process in accordance with any of the aforementioned claims,
**characterised in that** the intermediate product has an intermediate dampness of between 20 % and 40 %.

5. Process in accordance with any of the aforementioned claims,
**characterised in that** the intermediate product is dried from the intermediate dampness to a final dampness of between 10 % and 15 %.

6. Process in accordance with any of the aforementioned claims,
**characterised in that** four separate additives are used to provide the four substances CaO, SiO₂, H₂O and the magnesium compound referred to as MgX.

7. Process in accordance with claim 6,
**characterised in that** a first additive which provides one of the four above-mentioned substances is used, where this first additive also provides a second of the four above-mentioned substances, and that this second substance is also contained in a second additive which is intended as the main source of this second substance, where the quantity of the second additive is adapted to the quantity of the first additive, and is adjusted in such a way that the desired ratios of the four substances are maintained.

8. Process in accordance with claim 7,
**characterised in that** burnt dolomite is used as the source of magnesium, where the burnt dolomite contains MgO and CaO and that a second additive is used which is intended as the main source of CaO.

## Revendications

1. Procédé, destiné à la fabrication d'une litière pour animaux sous forme de granulés, passant par les étapes suivantes :
• Dans un premier temps et en utilisant du CaO, SiO₂, H₂O et un composé magnésique, on génère un matériau dopé au magnésium et appelé produit brut, sachant que le composé magnésique utilisé est un composé magnésique exempt de chlorure, puis l'on rajoute les matières solides dans les proportions suivantes :
en partant de 1 000 parts pondérales de SiO₂, on utilise entre 300 et 550 parts pondérales de CaO et entre 70 et 400 parts pondérales de MgO, et à une part pondérale de matières solides sont ajoutées entre 0,5 et 1,5 parts pondérales de H₂O,
• Le produit brut généré dans un premier temps subit ensuite un durcissement hydrothermique pour former un produit dit intermédiaire, sachant que ce produit intermédiaire contient un silicate de calcium hydraté appelé CSH ainsi qu'une humidité précise dite intermédiaire,
• Au cours de deux opérations, le produit intermédiaire est transformé en un produit final, le produit souhaité : au cours de la première, le produit intermédiaire subit un séchage le ramenant d'une humidité intermédiaire à une humidité finale qui est inférieure à l'humidité intermédiaire, sachant que le séchage a lieu en évitant une étape intermédiaire de séchage au cours de laquelle est atteint un degré d'humidité inférieur à l'humidité finale souhaitée,
• Et au cours de la seconde le produit intermédiaire est broyé jusqu'à obtention de la taille de grain souhaitée, appropriée à une utilisation comme litière pour chats.

2. Procédé selon la revendication 1,
**caractérisé en ce que** pour fabriquer le produit intermédiaire, on ajoute du calcaire dolomitique calciné comme support du composé magnétique exempt de chlorure.

3. Procédé selon la revendication 1,
**caractérisé en ce que** pour fabriquer le produit intermédiaire, on ajoute un sel magnésique officiant de composé magnésique exempt de chlorure.

4. Procédé selon l'une des revendications précédentes,
**caractérisé en ce que** le produit intermédiaire présente une humidité intermédiaire de 20 à 40 %.

5. Procédé selon l'une des revendications précédentes,
**caractérisé en ce que** l'humidité intermédiaire du produit intermédiaire est amenée à une humidité finale comprise entre 10 et 15 %.

6. Procédé selon l'une des revendications précédentes,
**caractérisé en ce que** quatre agrégats séparés sont utilisés pour livrer les quatre substances CaO, SiO₂, H₂O et le composé magnésique appelé MgX.

7. Procédé selon la revendication 6,
**caractérisé en ce que** l'on utilise un premier agrégat livrant l'une des quatre substances nommées, sachant que ce premier agrégat livre aussi la deuxième des quatre substances citées, et **en ce que** cette deuxième substance se trouve également dans un deuxième agrégat prévu comme fournisseur prioritaire de cette deuxième substance, sachant que la quantité du deuxième agrégat est adaptée à l'ajout du premier agrégat et dosée de telle manière que les proportions quantitatives souhaitées des quatre substances soient respectées.

8. Procédé selon la revendication 7,
**caractérisé en ce que** l'on utilise de la dolomite calcinée comme fournisseur de magnésium, sachant que la dolomite calcinée contient du MgO et du CaO, et **en ce qu'**est utilisé un deuxième agrégat prévu comme fournisseur prioritaire de CaO.
